# EUROPEAN PATENT APPLICATION

(11) **EP 3 495 249 A1**
(43) Date of publication of application: **12.06.2019**
(21) Application number: 18209346.8
(22) Date of filing: 29.11.2018
(51) Int. Cl.: B62D 25/12, E05B 83/24, E05B 79/10, E05B 15/04, B62D 49/00

(54) **WORKING VEHICLE**

(30) Priority: 01.12.2017 JP 2017232010
(71) Applicant: Iseki & Co., Ltd., Matsuyama-shi, Ehime 799-2692 (JP)
(72) Inventor: HISAOKA, Yasuhiro, Tobe-cho, Iyo-gun, Ehime 791-2193 (JP)
(74) Representative: Spengler, Robert

(57) **Abstract**

A working vehicle, comprising: a bonnet (70) for covering an engine room (60), a bonnet front side of which is rotatably attached to a vehicle-body (10), and a bonnet rear side of which is openable-and-closable; a bonnet fixer (100) provided in the engine room (60), which locks the closed bonnet (70); and a lock member (80) provided on an inner wall of the bonnet (70), which engages with the bonnet fixer (100), characterized in that a jig inserting hole (71), into which a jig (400) is inserted, is provided to the bonnet (70) and the jig (400) inserted into the jig inserting hole (71) abuts onto the bonnet fixer (100), and thereby an operation to release a lock of the closed bonnet (70) is performed.

## Description

### BACKGROUND OF THE INVENTION

### Field of the Invention

The present invention relates to a working vehicle such as an agricultural tractor or the like.

### Related Art of the Invention

Known is a working vehicle for which an operation to release a lock of the bonnet can be readily performed with a lever (for example, refer to Japanese Patent Application Publication No. Hei 5-139339).

### SUMMARY OF THE INVENTION

However, in the conventional working vehicle described above, danger accompanying an unintentional opening of the bonnet exists.

A purpose of the present invention is, in consideration of the conventional problem described above, to furnish a working vehicle for which danger accompanying an unintentional opening of the bonnet can be reduced.

The 1^{st} aspect of the present invention is a working vehicle, comprising: a bonnet (70) for covering an engine room (60), a bonnet front side of which is rotatably attached to a vehicle-body (10), and a bonnet rear side of which is openable-and-closable; a bonnet fixer (100) provided in the engine room (60), which locks the closed bonnet (70); and a lock member (80) provided on an inner wall of the bonnet (70), which engages with the bonnet fixer (100), characterized in that a jig inserting hole (71), into which a jig (400) is inserted, is provided to the bonnet (70) and the jig (400) inserted into the jig inserting hole (71) abuts onto the bonnet fixer (100), and thereby an operation to release a lock of the closed bonnet (70) is performed.

By means of this, since the jig (400) inserted into the jig inserting hole (71) abuts onto the bonnet fixer (100), and thereby an operation to release a lock of the closed bonnet (70) is performed, danger accompanying an unintentional opening of the bonnet (70) can be reduced.

The 2^{nd} aspect of the present invention is the working vehicle according to the 1^{st} aspect of the present invention, wherein the bonnet fixer (100) possesses: a receiving member (210) which receives the lock member (80) at a time when the bonnet (70) is being closed; a rotating member (220) with which the lock member (80) being received by the receiving member (210) is engageable; and an energizing member (230) which energizes the rotating member (220), so that the lock member (80) engages with the rotating member (220), at a front side of an inner wall (300a) of a dashboard (300) arranged behind the engine room (60), a bonnet fixer attaching base-part (310) is attached, the receiving member (210) is provided standingly from the bonnet fixer attaching base-part (310), the rotating member (220) is provided on a face of the receiving member (210) being positioned at a side of the dashboard (300), and to the bonnet fixer attaching base-part (310), a notch (311) is provided, so that a rotating-axis part (223) of the rotating member (220) is viewable from a side of the dashboard (300).

By means of this, since the notch (311) is provided, so that the rotating-axis part (223) of the rotating member (220) is viewable from the side of the dashboard (300), assembly of the rotating member (220) can be readily performed from the side of the dashboard (300).

The 3^{rd} aspect of the present invention is the working vehicle according to the 2^{nd} aspect of the present invention, wherein a spring (320), which energizes at a time when the bonnet (70) is being closed, the bonnet (70) so that the bonnet (70) opens up, is attached to the bonnet fixer attaching base-part (310), the rotating member (220) is positioned at one of left and right unevenly with respect to a center of the bonnet fixer attaching base-part (310), and the spring (320) is positioned at another of the left and the right.

By means of this, since the rotating member (220) is positioned at one of the left and the right unevenly with respect to the center of the bonnet fixer attaching base-part (310), and the spring (320) is positioned at another of the left and the right, interference between the rotating member (220) and the spring (320) is not generated.

The 4^{th} aspect of the present invention is the working vehicle according to the 3^{rd} aspect of the present invention, wherein a spring abutting plate (75), which abuts onto the spring (320) at a time when the bonnet (70) is being closed, is attached to a bonnet innerside reinforcing part (73) of the bonnet (70) together with the lock member (80).

By means of this, an unintentional opening of the bonnet (70) due to vibration and the like is suppressed without accompanying large increase of the number of components.

By the present invention, a working vehicle for which danger accompanying an unintentional opening of the bonnet is able to be reduced can be furnished.

### BRIEF DESCRIPTION OF THE DRAWINGS

FIG. 1 is a schematic left side view of the agricultural tractor of the embodiment in the present invention;
FIG. 2 is a partial perspective view (No. 1) of the neighborhood of the bonnet fixer of the agricultural tractor of the embodiment in the present invention;
FIG. 3 is a partial perspective view (No. 2) of the neighborhood of the bonnet fixer of the agricultural tractor of the embodiment in the present invention;
FIG. 4 is a partial perspective view (No. 3) of the neighborhood of the bonnet fixer of the agricultural tractor of the embodiment in the present invention;
FIG. 5 is a partial perspective view (No. 4) of the neighborhood of the bonnet fixer of the agricultural tractor of the embodiment in the present invention;
FIG. 6 is a partial perspective view (No. 5) of the neighborhood of the bonnet fixer of the agricultural tractor of the embodiment in the present invention;
FIG. 7 is a partial perspective view (No. 6) of the neighborhood of the bonnet fixer of the agricultural tractor of the embodiment in the present invention; and
FIG. 8 is a partial perspective view (No. 7) of the neighborhood of the bonnet fixer of the agricultural tractor of the embodiment in the present invention.

### Description of the Reference Numerals

- 10: vehicle-body
- 11: 3-point link mechanism
- 20: driving unit
- 21: driving seat
- 22: floor
- 23: steering wheel
- 30: engine
- 31: transmission case
- 40: front-wheel
- 50: rear-wheel
- 60: engine room
- 70: bonnet
- 70a: bonnet main-body part
- 70b: front light part
- 70c: front grille part
- 70d: bonnet attaching part
- 71: jig inserting hole
- 72: guiding part
- 73: bonnet innerside reinforcing part
- 74: lock member attaching plate
- 75: spring abutting plate
- 80: lock member
- 100: bonnet fixer
- 210: receiving member
- 211: slot
- 212: hole
- 220: rotating member
- 221: main-body part
- 221a: concavity
- 222: abutting part
- 223: rotating-axis part
- 230: energizing member
- 230a: one end part
- 230b: another end part
- 300: dashboard
- 300a: inner wall
- 301: fastening member
- 310: bonnet fixer attaching base-part
- 311: notch
- 320: spring
- 321: spring attaching bolt
- 322: spring attaching nut
- 323: spring cap
- 400: jig

### DESCRIPTION OF THE EMBODIMENTS

In the following, referring to the drawings, descriptions are given in detail regarding embodiments in the present invention.

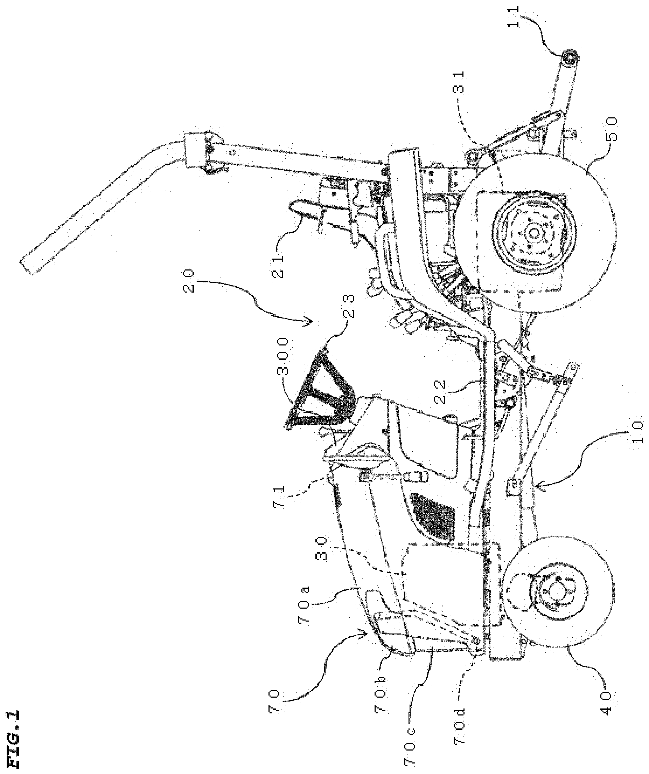

In the beginning, referring to FIGs. 1 to 5, descriptions are specifically given regarding the configuration and action of an agricultural tractor of the present embodiment which is one example of the working vehicle in the present invention.

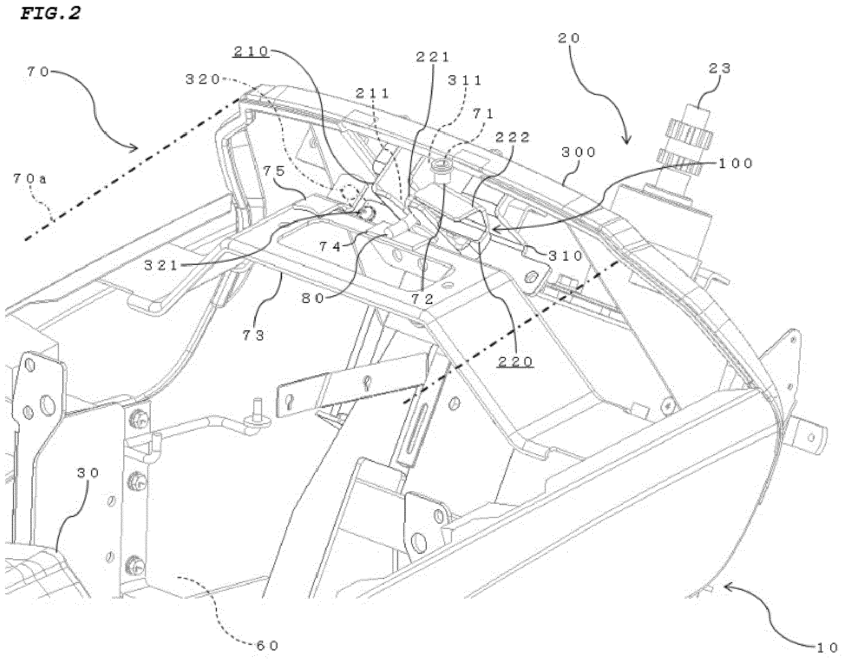

Here, FIG. 1 is a schematic left side view of the agricultural tractor of the embodiment in the present invention, and FIGs. 2 to 5 are partial perspective views (Nos. 1 to 4) of the neighborhood of a bonnet fixer 100 of the agricultural tractor of the embodiment in the present invention.

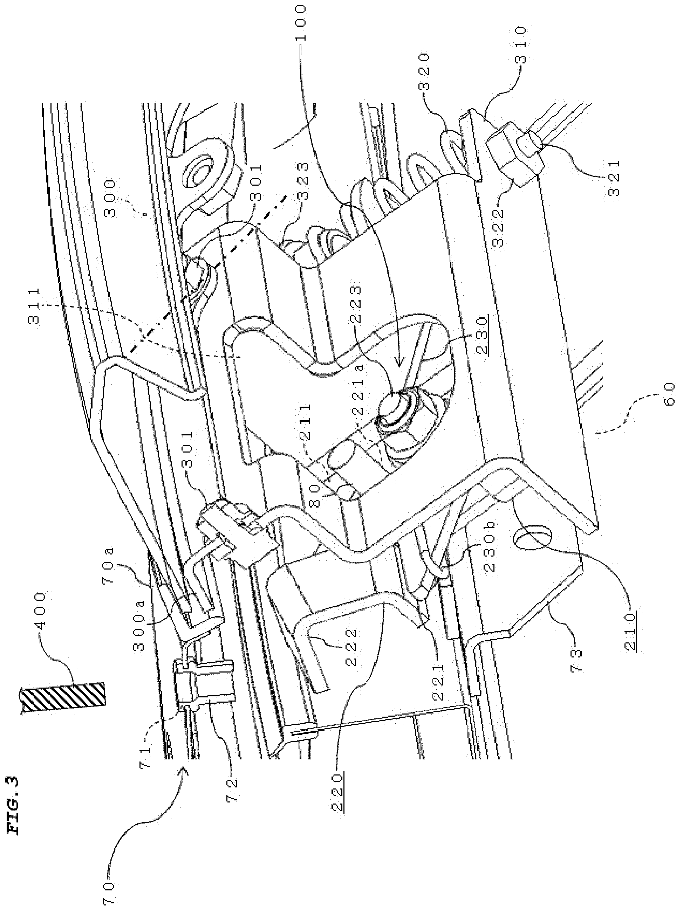

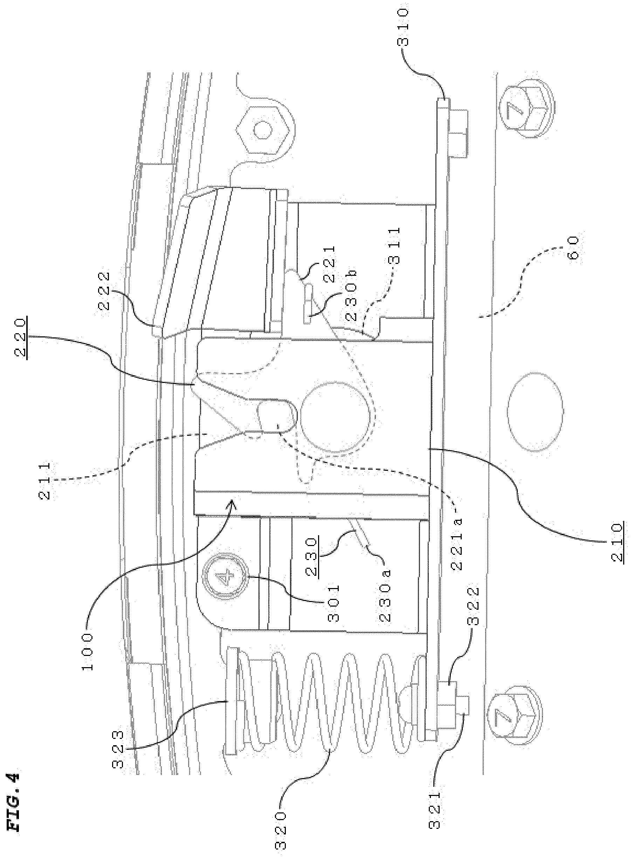

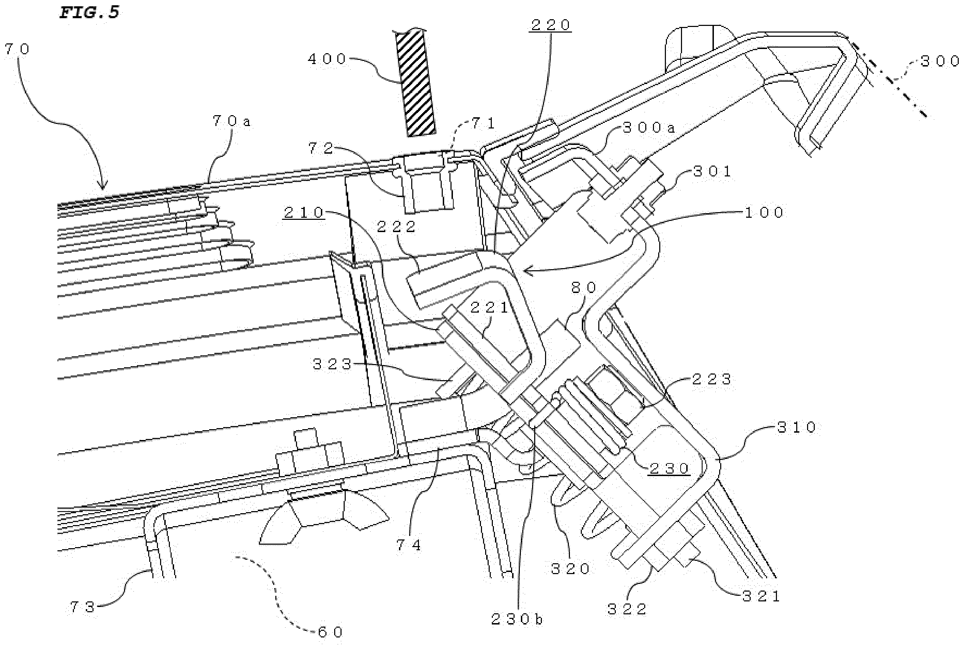

The agricultural tractor of the present embodiment is viewed from a left upper front side in FIG. 2, is viewed from a left upper rear side in FIG. 3, is viewed from a lower side in FIG. 4, and is viewed from a left side in FIG. 5.

More specifically, for example, the bonnet fixer 100 is obliquely viewed down in FIG. 2 from the side of a bonnet 70, and is obliquely viewed down in FIG. 3 from the side of a driving seat 21, but is obliquely viewed up in FIG. 4 from the back side which is not viewable from the side of the driving seat 21.

In FIGs. 3 and 5, the state where a jig 400 is going to be inserted into a jig inserting hole 71 is shown.

Several configuration elements are sometimes not shown in the drawings and are sometimes shown with omission; the same shall apply hereinafter. For example, in FIG. 2, the jig inserting hole 71 is shown with solid lines, but the rear upper part of a bonnet main-body part 70a is transparently shown with one dot chain lines, the rear upper part of a dashboard 300 is transparently shown in FIG. 3 with a one dot chain line, and a part of a bonnet fixer attaching base-part 310 and the like are cut off and not shown in FIGs. 3 and 5, so that the configurations of the bonnet fixer 100 and the like will be easier to understand.

What is described in the first place is the fundamental configuration and action of the agricultural tractor of the present embodiment. Hence, regarding the configuration and action and the like which are related to the bonnet fixer 100, descriptions are later given in detail.

In an engine room 60 which is the inside of the bonnet 70 of the front part of a vehicle-body 10, a fuel tank, a muffler, a radiator and the like are provided, together with an engine 30 which is made to start up utilizing an ignition key being a main key.

Rotary motive force of the engine 30 is transmitted via an HST (Hydro Static Transmission) to a speed-changing device inside a transmission case 31 provided below a floor 22 of a driving unit 20. And, the rotary motive force with speed-decreasing having been carried out at the speed-changing device is transmitted to a left-and-right pair of front-wheels 40, a left-and-right pair of rear-wheels 50, and the like.

In the driving unit 20 behind the engine 30, a steering wheel 23, the frontward/rearward movement lever and the like are provided. Behind the steering wheel 23, the driving seat 21 is provided. The hose cover covers hoses which are joined to the steering wheel 23. On the floor 22 at the left side of the operation column cover, the clutch pedal and the like are arranged. On the floor 22 at the right side of the operation column cover, the left brake pedal and the right brake pedal, the accelerator pedal, and the like are arranged.

To the rear part of the vehicle-body 10, a 3-point link mechanism 11 in which a working machine is installed is provided.

The bonnet 70 is an openable-and-closable bonnet, which covers the engine room 60.

More specifically, the bonnet 70 is a bonnet for covering the engine room 60, the bonnet front side of which is rotatably attached to the vehicle-body 10, and the bonnet rear side of which is openable-and-closable.

The bonnet main-body part 70a is, so as to conform to a hood rear-opening style, rotatably attached to the vehicle-body 10 with a left-and-right pair of bonnet attaching parts 70d ahead of the engine room 60. Not only a front grille part 70c for the front grille which is for engine-cooling ventilation, but a front light part 70b for the left-and-right pair of the front lights which are for lighting is integrated with the bonnet main-body part 70a.

The bonnet fixer 100 is a fixer provided in the engine room 60, which locks the closed bonnet 70.

A lock member 80 is a member provided on the inner wall of the bonnet 70, which engages with the bonnet fixer 100.

To the bonnet 70, the jig inserting hole 71 into which the jig 400 is inserted is provided.

The jig inserting hole 71 is arranged in the rear part of the bonnet 70.

As descriptions are later given further, the jig inserting hole 71 is provided to the left upper part of the bonnet main-body part 70a as a penetrating hole.

Additionally, for example, the embodiment of a variant example is also conceived, where the jig inserting hole 71 is arranged in the right upper part or the central upper part, or the lower part of the bonnet main-body part 70a.

The jig 400 inserted into the jig inserting hole 71 abuts onto the bonnet fixer 100, and thereby an operation to release a lock of the closed bonnet 70 is performed.

To the bonnet 70 the jig inserting hole 71 is provided and, since the jig 400 inserted into the jig inserting hole 71 abuts onto the bonnet fixer 100, and thereby an operation to release a lock of the closed bonnet 70 is performed, danger accompanying an unintentional opening of the bonnet 70 can be reduced.

And, a configuration like this is a configuration that satisfies the homologation being a new European certification regulation, which does not permit a style for which the bonnet 70 can be opened only with a finger without a jig.

Next, mainly referring to FIGs. 2 to 5, descriptions are more specifically given regarding the configuration and action of the agricultural tractor of the present embodiment.

The lock member 80 is a pin member.

More specifically, the lock member 80 is a round-stick slightly bent, the front end part of which is attached to the upper face of a lock member attaching plate 74 with welding. The lock member attaching plate 74 is a flat-plate, the lower face of which is attached to the upper face of a bonnet innerside reinforcing part 73 with welding. The bonnet innerside reinforcing part 73 is a bent flat-plate, the left-and-right end parts of which are attached to the inner wall of the bonnet main-body part 70a.

The bonnet fixer 100 possesses: a receiving member 210; a rotating member 220; and an energizing member 230.

The receiving member 210 is a member which receives the lock member 80 at a time when the bonnet 70 is being closed. The rotating member 220 is a member with which the lock member 80 being received by the receiving member 210 is engageable. The energizing member 230 is a member which energizes the rotating member 220, so that the lock member 80 engages with the rotating member 220.

The rotating member 220 possesses an abutting part 222 onto which the jig 400 inserted into the jig inserting hole 71 abuts.

Since the rotating member 220 possesses the abutting part 222 onto which the jig 400 abuts, an operation to release a lock of the closed bonnet 70 can be readily performed.

Regarding the receiving member 210, the rotating member 220 and the energizing member 230, descriptions are later given further.

At the outlet of the jig inserting hole 71, a guiding part 72 in a pipe-shape is provided, which guides the jig 400 so that the jig 400 inserted into the jig inserting hole 71 abuts onto the abutting part 222.

Since at the outlet of the jig inserting hole 71 the guiding part 72 is provided which guides the jig 400 so that the jig 400 abuts onto the abutting part 222, an operation to release a lock of the closed bonnet 70 can be surely performed.

Since the jig inserting hole 71 is arranged in the bonnet 70, and the guiding part 72 is a member provided at the outlet of the jig inserting hole 71, the position-relationship between the jig inserting hole 71 and the guiding part 72, both of which are integrally formed with the bonnet 70, is fixed, and the guiding part 72 can surely guide the jig 400 so that the jig 400 abuts well onto the abutting part 222.

Additionally, for example, the embodiment of a variant example is also conceived, where at the inlet of the jig inserting hole 71 the guiding part 72 is provided which guides the jig 400.

Next, mainly referring to FIGs. 5 to 8, descriptions are still more specifically given regarding the configuration and action of the agricultural tractor of the present embodiment.

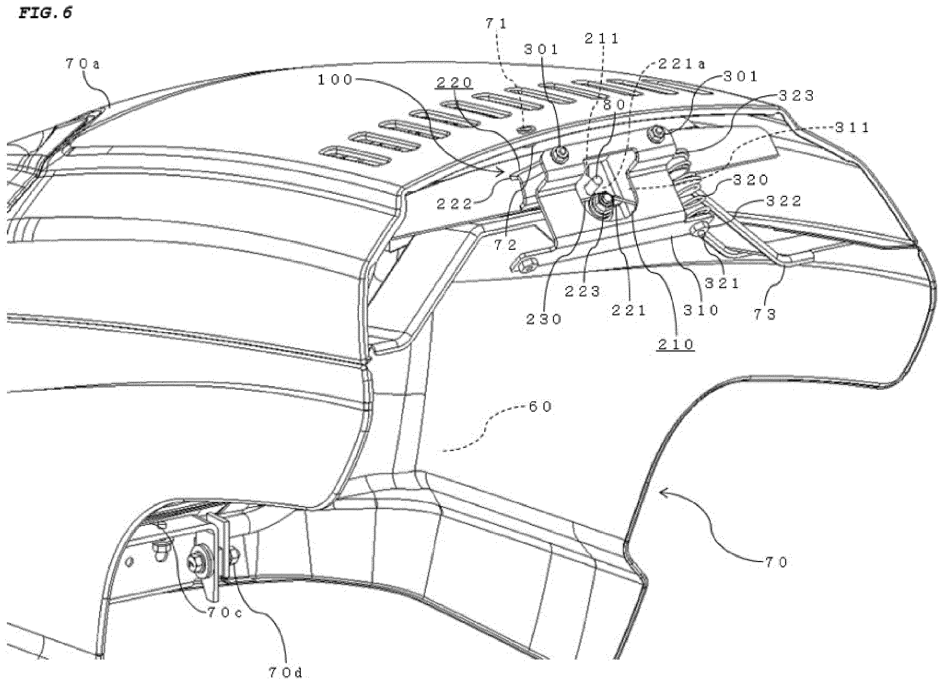

Here, FIGs. 6 to 8 are partial perspective views (Nos. 5 to 7) of the neighborhood of the bonnet fixer 100 of the agricultural tractor of the embodiment in the present invention.

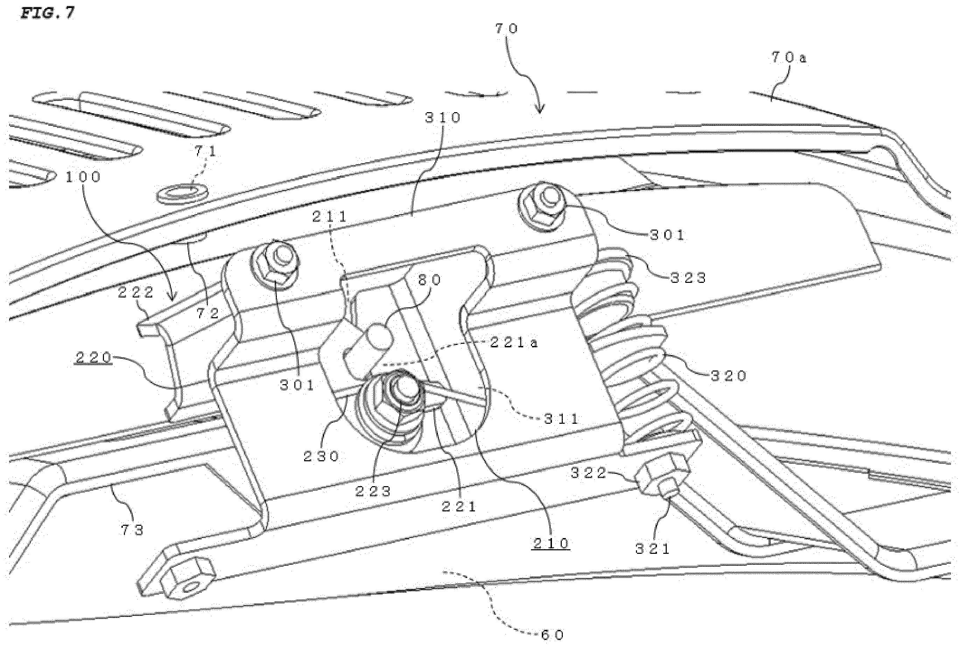

The agricultural tractor of the present embodiment is viewed from a left upper rear side in FIGs. 6 to 8. The sight-line vector in FIG. 7 agrees with the sight-line vector in FIG. 6.

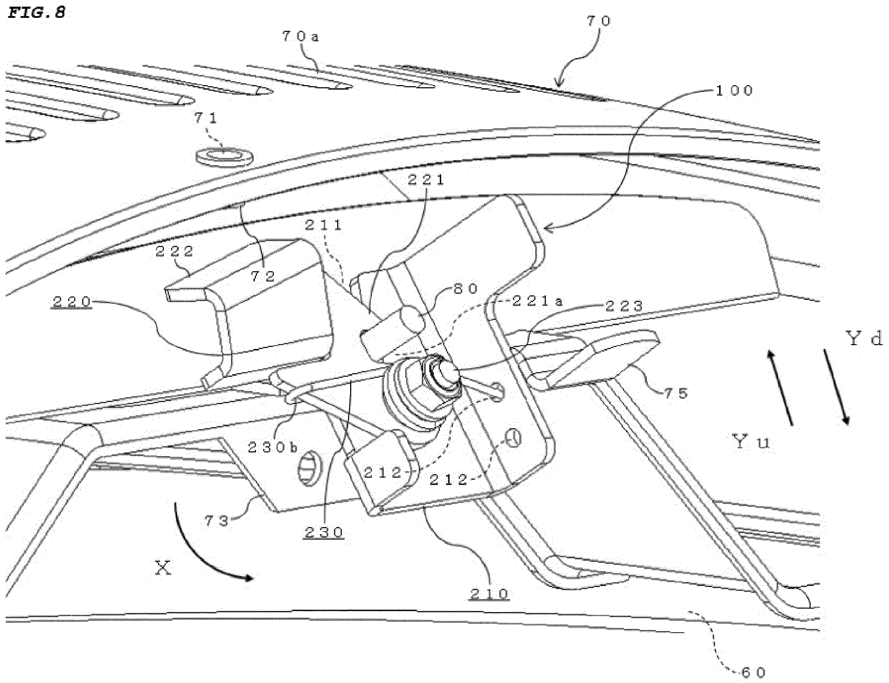

In FIG. 8, the bonnet fixer attaching base-part 310 is not shown, so that the configurations of the bonnet fixer 100 and the like will be easier to understand.

At the front side of an inner wall 300a of the dashboard 300 arranged behind the engine room 60, the bonnet fixer attaching base-part 310 is attached.

More specifically, the bonnet fixer attaching base-part 310 which is a flat-plate bent in a step-shape is, utilizing a left-and-right pair of fastening members 301, attached from below at the front side of the inner wall 300a of the dashboard 300, which is bent roughly in an L-shape.

The receiving member 210 is provided standingly from the bonnet fixer attaching base-part 310.

More specifically, the lower end part of the receiving member 210 which is a flat-plate bent roughly in an L-shape is attached to the bonnet fixer attaching base-part 310 with welding. Like this, the bonnet fixer attaching base-part 310 functions as a bracket part of the receiving member 210 provided standingly as a column member.

The rotating member 220 is provided on a face of the receiving member 210 being positioned at the side of the dashboard 300.

The energizing member 230 is a torsion spring member attached to a rotating-axis part 223 of the rotating member 220, one end part 230a of which is joined to the receiving member 210, and another end part 230b of which is joined to the rotating member 220.

More specifically, the abutting part 222 of the rotating member 220, onto the upper face of which the jig 400 abuts, is a flat-plate bent roughly in a U-shape. A main-body part 221 of the rotating member 220, to which the abutting part 222 of the rotating member 220 is attached with welding, is a member with which the lock member 80 is engageable, and is rotatably attached to the receiving member 210, utilizing the rotating-axis part 223 the lower end part of which is fitted into the receiving member 210 from above.

And, to the front face of the receiving member 210, a slot 211 for receiving the lock member 80 is provided. To the right face of the receiving member 210, two holes 212 for joining the one end part 230a of the energizing member 230 are provided so as to be selectively utilized according to attaching positions of the energizing member 230 and the like. The one end part 230a of the energizing member 230 is straight so as to be readily inserted into the hole 212, and the another end part 230b of the energizing member 230 is bent roughly in a U-shape so as to readily engage with the main-body part 221 of the rotating member 220.

To the bonnet fixer attaching base-part 310, a notch 311 is provided, so that the rotating-axis part 223 of the rotating member 220 is viewable from the side of the dashboard 300.

Since the notch 311 is provided so that the rotating-axis part 223 is viewable, assembly of the receiving member 210, the rotating member 220 and the energizing member 230 can be readily performed from the side of the dashboard 300.

A spring 320, which energizes at a time when the bonnet 70 is being closed, the bonnet 70 so that the bonnet 70 opens up, is attached to the bonnet fixer attaching base-part 310. The rotating member 220 is positioned at one of the left and the right unevenly with respect to the center of the bonnet fixer attaching base-part 310. The spring 320 is positioned at another of the left and the right.

A spring abutting plate 75, which abuts onto the spring 320 at a time when the bonnet 70 is being closed, is attached to the bonnet innerside reinforcing part 73 of the bonnet 70 together with the lock member 80.

Specifically, descriptions regarding the opening-and-closing of the bonnet 70 are given as follows.

In the engine room 60, the spring 320 is provided.

The spring 320 is provided standingly from the bonnet fixer attaching base-part 310 utilizing a spring attaching bolt 321. The tail part of the spring attaching bolt 321 screws to a spring attaching nut 322.

To the free end part of the spring 320, a spring cap 323 is attached.

The spring cap 323, when the bonnet 70 is being closed, abuts onto the lower face of the spring abutting plate 75. The spring abutting plate 75 is a flat-plate bent in a step-shape, the lower face of which is attached to the upper face of the bonnet innerside reinforcing part 73 with welding.

The spring 320, as well as the receiving member 210, is also provided standingly from the bonnet fixer attaching base-part 310 but, since the rotating member 220 provided on a face of the receiving member 210 is positioned at the left, and the spring 320 is positioned at the right, interference between the rotating member 220 and the spring 320 is not generated.

More specifically, descriptions regarding the opening-and-closing of the bonnet 70 are given as follows.

In the beginning, descriptions are given regarding an operation to close the bonnet 70.

When the bonnet 70 is going to be closed, the lock member 80 of the bonnet 70 downwardly moves in the orientation shown with the arrow Yd, while pushing the rotating member 220 in the counterclockwise orientation shown with the arrow X against energizing force of the energizing member 230.

The lock member 80 of the bonnet 70 can readily push the main-body part 221 of the rotating member 220 in the counterclockwise orientation, and the bonnet 70 downwardly moves smoothly.

The bonnet 70 is closed, the posture of the rotating member 220, which has been pushed in the counterclockwise orientation, then returns to the original posture, and the lock member 80 received in the slot 211 of the receiving member 210 engages with the main-body part 221 of the rotating member 220.

At this time, the spring cap 323 is abutting onto the lower face of the spring abutting plate 75, and the bonnet 70 is upwardly pushed in the orientation shown with the arrow Yu by energizing force of the spring 320.

Thereupon, the lock member 80 of the bonnet 70 firmly engages with a concavity 221a provided to the main-body part 221 of the rotating member 220, and the bonnet 70 does not move.

The spring cap 323 firmly abuts onto the lower face of the flat and robust spring abutting plate 75, and the bonnet fixer attaching base-part 310 also functions as a supporting member which supports the spring 320 from below.

Because of this, an unintentional opening of the bonnet 70 due to vibration of the vehicle-body 10 and the like is suppressed without accompanying large increase of the number of components.

Next, descriptions are given regarding an operation to open the bonnet 70.

When the bonnet 70 is going to be opened, the jig 400 inserted into the jig inserting hole 71 pushes the rotating member 220 in the counterclockwise orientation shown with the arrow X, against energizing force of the energizing member 230.

The jig 400 inserted into the jig inserting hole 71 can readily push the abutting part 222 of the rotating member 220 in the counterclockwise orientation.

Also at this time, the spring cap 323 is abutting onto the lower face of the spring abutting plate 75, and the bonnet 70 is upwardly pushed in the orientation shown with the arrow Yu by energizing force of the spring 320.

Thereupon, the lock member 80 of the bonnet 70 readily gets out of the concavity 221a provided to the main-body part 221 of the rotating member 220, and the bonnet 70 upwardly moves smoothly.

The jig 400 inserted into the jig inserting hole 71 is taken out from the jig inserting hole 71, and the posture of the rotating member 220, which has been pushed in the counterclockwise orientation, then returns to the original posture.

At a time when the posture of the rotating member 220 returns to the original posture, since the right end part of the abutting part 222 of the rotating member 220 abuts onto the left end part of the receiving member 210, the rotating member 220 does not excessively rotate, and the receiving member 210 also functions as an abutting stopper of the rotating member 220.

As described above, the spring cap 323 firmly abuts onto the lower face of the flat and robust spring abutting plate 75, and the bonnet fixer attaching base-part 310 also functions as a supporting member which supports the spring 320 from below.

Because of this, an operation to open up the bonnet 70 is assisted without accompanying large increase of the number of components.

A working vehicle in the present invention, for which danger accompanying an unintentional opening of the bonnet can be reduced, is useful, for example, for the purpose of utilizing for a working vehicle such as an agricultural tractor or the like.

## Claims

1. A working vehicle, comprising:
a bonnet (70) for covering an engine room (60), a bonnet front side of which is rotatably attached to a vehicle-body (10), and a bonnet rear side of which is openable-and-closable;
a bonnet fixer (100) provided in the engine room (60), which locks the closed bonnet (70); and
a lock member (80) provided on an inner wall of the bonnet (70), which engages with the bonnet fixer (100),
**characterized in that**
a jig inserting hole (71), into which a jig (400) is inserted, is provided to the bonnet (70) and
the jig (400) inserted into the jig inserting hole (71) abuts onto the bonnet fixer (100), and thereby an operation to release a lock of the closed bonnet (70) is performed.

2. The working vehicle according to claim 1, wherein
the bonnet fixer (100) possesses:
a receiving member (210) which receives the lock member (80) at a time when the bonnet (70) is being closed;
a rotating member (220) with which the lock member (80) being received by the receiving member (210) is engageable; and
an energizing member (230) which energizes the rotating member (220), so that the lock member (80) engages with the rotating member (220),
at a front side of an inner wall (300a) of a dashboard (300) arranged behind the engine room (60), a bonnet fixer attaching base-part (310) is attached,
the receiving member (210) is provided standingly from the bonnet fixer attaching base-part (310),
the rotating member (220) is provided on a face of the receiving member (210) being positioned at a side of the dashboard (300), and
to the bonnet fixer attaching base-part (310), a notch (311) is provided, so that a rotating-axis part (223) of the rotating member (220) is viewable from a side of the dashboard (300).

3. The working vehicle according to claim 2, wherein
a spring (320), which energizes at a time when the bonnet (70) is being closed, the bonnet (70) so that the bonnet (70) opens up, is attached to the bonnet fixer attaching base-part (310),
the rotating member (220) is positioned at one of left and right unevenly with respect to a center of the bonnet fixer attaching base-part (310), and
the spring (320) is positioned at another of the left and the right.

4. The working vehicle according to claim 3, wherein
a spring abutting plate (75), which abuts onto the spring (320) at a time when the bonnet (70) is being closed, is attached to a bonnet innerside reinforcing part (73) of the bonnet (70) together with the lock member (80).
